# EUROPÄISCHE PATENTANMELDUNG

(11) **EP 2 527 203 A1**
(43) Veröffentlichungstag der Anmeldung: **28.11.2012**
(21) Anmeldenummer: 12157547.6
(22) Anmeldetag: 29.02.2012
(51) Int. Cl.: B60R 9/06, B60R 9/10

(54) **Heckträger mit Ladestation**

(30) Priorität: 24.05.2011 DE 202011050240 U
(71) Anmelder: mft transport systems GmbH, 74532 IIshofen-Großallmerspann (DE)
(72) Erfinder: Bohn, Peter, 74532 Ilshofen (DE)
(74) Vertreter: Winter, Brandl, Fürniss, Hübner, Röss, Kaiser, Polte - Partnerschaft

(57) **Zusammenfassung**

Offenbart wird ein Lastenheckträger, der an eine Kugelkopf-Anhängerkupplung eines Fahrzeugs mittels einer trägerseitigen Kupplung (2) anschließbar ist, mit einer trägereigene elektrische Ladestation (30) für zumindest einen Akkumulator vorzugsweise einer auf dem Träger transportierten Last.

## Beschreibung

### Gegenstand der Erfindung

Die vorliegende Erfindung betrifft einen Anhängerkupplungs-gebundenen Fahrzeugheckträger beispielsweise zum Transport von Fahrrädern und/oder anderen Lasten und insbesondere einen Heckträger gemäß dem Oberbegriff des Patentanspruchs 1.

### Technischer Hintergrund der Erfindung

Grundsätzlich können Lasten außerhalb eines Kraftfahrzeugs wie ein Personenwagen auf dessen Dach oder an dessen Fahrzeugheck insbesondere auf dessen Anhängerkupplung transportiert werden. Dachtransportsysteme haben hierbei den grundsätzlichen Nachteil, dass Lasten auf Dachhöhe angehoben und zusätzlich über das Dach geschwenkt werden müssen, was beispielsweise im Fall einen Fahrrads einen erheblichen Kraftaufwand voraussetzt. Darüber hinaus erhöht sich durch die Dachlast beträchtlich der Luftwiderstand und trägt somit zu einem gesteigerten Kraftstoffverbrauch bei. Letztlich besteht beim Hantieren der Last in Dachhöhe immer das Risiko einer unabsichtlichen Beschädigung des Fahrzeugs. Dieses Problem besteht insbesondere in dem Fall, dass sogenannte E-Bikes transportiert werden sollen. Hierbei handelt es sich um motorisch unterstütze Fahrräder mit einem elektrischen Hilfsantrieb beispielsweise in der Radnabe der Hinterrads, der über einen Hochleistungsakku mit elektrischer Energie versorgt wird. Ein solcher Akku ist in der Regel keine gewöhnliche Bleibatterie sondern beispielsweise ein Li-lon-Akkumulator oder ein Li-Polymer-Akkumulator mit hoher Energiedichte bei geringen äußeren Abmessungen.

Aus den vorstehend genannten Gründen setzen sich Hecktragesysteme zum Außentransport von Lasten immer mehr auf dem Markt durch. Hierbei handelt es sich im Wesentlichen um ein starres Rahmengestell als Lastauflager, an dem eine Kupplung angeordnet ist, die mit der fahrzeugseitigen Anhängerkupplung bestehend aus einem Kupplungshals, an dessen freiem Ende ein Kugelkopf ausgeformt ist, in einen Klemmeingriff (Reibschluss) gebracht werden kann.

In der Regel wird hierfür das Rahmengestell bei geöffneter Kupplung auf den Kugelkopf der fahrzeugseitigen Anhängerkupplung aufgesetzt bzw. eingekuppelt und in einer vorbestimmten, vorzugsweise horizontalen Ausrichtung (manuell) gehalten. Anschließend wird die rahmengestellseitige Kupplung vorzugsweise bestehend aus zwei Kugelkalotten oder Ringen sowie einer Spannvorrichtung geschlossen und mittels eines Hebelgetriebes verspannt. Die Spannkraft ist dabei so groß gewählt, dass die dabei sich einstellende Reibschlussverbindung ein Verschwenken des Rahmengestells am Kugelkopf verhindert.

Aber auch bei diesem bekannten System ergibt sich das Problem, dass beim Aufsetzten des notwendiger Weise stabilen (starren) und damit in der Regel recht schweren Rahmengestells der Benutzer den Heckträger im Wesentlichen horizontal halten und ausbalancieren muss, solange, bis die Kugelkalotten geschlossen und vorgespannt sind. Auch hierfür ist ein bestimmter Kraftaufwand erforderlich, der nicht von jedem Benutzer erbracht werden kann. Dies gilt insbesondere bei Heckträgern die für die vorstehend genannten E-Bikes konzipiert sind, d.h. die eine stabilere und damit auch schwerere Rahmenkonstruktion aufweisen müssen.

Ein weiteres Problem stellt sich bei der Verspannung der trägerseitigen Kupplung selbst. Wie hierzu vorstehend bereits angedeutet wurde, muss die fahrzeugseitige Anhängerkupplung, d.h. deren Kugelkopf mit einer bestimmten Kraft zwischen den den Kugelkopf umschließenden Kupplungselementen wie beispielsweise die Kugelkalotten eingespannt werden, um eine Flächenkraft zu erzeugen, die wiederum eine vorbestimmte Reibkraft zwischen Kugelkopf und Kalotten bewirkt. Die Höhe der Reibkraft ist entscheidend darüber, ob der Heckträger stabil Lastkräfte in die Anhängerkupplung auch während der Fahrt einleiten kann. Die hierbei aufzuwendende Vorspannkraft ist so beträchtlich, dass trotz Einsatz von Getrieben und langen Hebeln immer noch eine nicht geringe Muskelkraft erforderlich ist, die viele Benutzer einfach überfordert.

Schließlich haben insbesondere E-Bikes besondere Eigenschaften, die darauf abgestimmte Benutzungsvorgänge erfordern. So entfaltet ein E-Bike seine Funktion der Tretkraftunterstützung nur dann, wenn die Batterie geladen ist. In den seltensten Fällen stehen Ersatzakkus zu Verfügung. Ist also das Aufladen des Akkus versäumt worden muss dieser mühevoll während der Fahrt aufgeladen werden. In diesem Fall wirkt der elektrische Motor als Generator, der dann jedoch den Tretvorgang noch zusätzlich erschwert. Auch besteht die Möglichkeit, den Akku aus dem E-Bike auszubauen und innerhalb des Kraftfahrzeugs an das Bordnetz anzuschließen. Dies ist aber sehr aufwändig und es ist ein entsprechend geeignetes Ladegerät erforderlich, das ebenfalls mitgeführt werden muss.

### Stand der Technik

Es gibt nunmehr im einschlägigen Stand der Technik einige konstruktive Anstrengungen zur verbesserten (ergonomischeren) Anordnung der Betätigungshebel für die Heckträgerkupplung wie auch für eine funktionellere Kupplung selbst. Auch sind grundsätzlich Heckträger im Stand der Technik bekannt, die speziell für die genannten E-Bikes konzipiert sind.

So ist es beispielweise aus dem Prospekt der Firma Thule bezüglich ihres Heckträgers "EuroPower" bekannt, den Betätigungshebel für die Heckträgerkupplung in Form eines Schwenkhebels in Fahrzeuglängsrichtung auszurichten und somit den Griffabschnitt des Betätigungshebels von der Heckseite des Trägers gut erreichbar zu platzieren. In diesem Fall kann der Benutzer nach Aufsetzen des Rahmengestells auf die fahrzeugseitige Anhängerkupplung den Träger mit einer Hand in der horizontalen Position gut halten und mit der anderen Hand den Betätigungshebel für die Kupplung ergonomisch sinnvoll zu sich herziehen und dabei nach unten verschwenken.

Zusätzlich sieht dieser bekannte Fahrzeugheckträger bereits ein weiteres Betätigungspedal vor, dass auf einen Heckträger integrierten Schwenkmechanismus einwirkt. Wird das Betätigungspedal nach unten getreten, kommt hierdurch der Schwenkmechanismus frei, wodurch das Rahmengestell um einen zentralen Träger, an dem die Kupplung angeordnet ist, nach hinten verschwenkt (gekippt) werden kann. Auf diese Weise kann auch bei aufgelasteten Fahrrädern ein Zugang beispielsweise zum Kofferraum oder zur Heckklappe des Fahrzeugs geschaffen werden, der ausreicht, um die Heckklappe oder den Kofferraumdeckel zu öffnen/schließen. Das Fußpedal hat sich hierbei in sofern als vorteilhaft erwiesen, da bei dessen unachtsamer Betätigung die plötzlich nach hinten kippende Last den hierbei aufrecht stehenden Benutzer nicht ernsthaft treffen und ggf. verletzen kann.

Eine weiterreichende Lösung sieht beispielsweise die DE 10 2006 013 465 A1 vor. Auch hier ist ein in Fahrzeuglängsrichtung ausgerichteter Betätigungshebel für die heckträgerseitige Kupplung vorgesehen, um den Betätigungsgriff in Richtung Heckseite des Trägers zu verlegen, wo in der Regel der Benutzer bei der Montage des Trägers auf der Anhängerkupplung steht. Darüber hinaus ist die trägerseitige Kupplung mit einem Stabilisierungssystem ausgerüstet, um das Rahmengestell noch vor Verspannen der Kupplung in einer im Wesentlichen horizontalen Position zu stabilisieren und dadurch den Benutzer von dieser Stabilisierungsaufgabe zu entlasten.

Im Konkreten hat die trägerseitige Kupplung gemäß diesem Stand der Technik eine starre Kalotte, die an einen Rahmengestell des Heckträgers montiert ist und deren Wirkfläche in Fahrtrichtung (d.h. zum Fahrzeugheck hin) ausgerichtet ist, sowie einen in Fahrzeuglängsrichtung schwenkbaren Spannbügel, der mittels des Betätigungshebels sowie eines zwischengeschalteten Rastmechanismus verschwenkbar ist. Um den Fahrzeugheckträger auf die Anhängerkupplung des Fahrzeugs aufzusetzen, wird der Betätigungshebel entgegen der Fahrtrichtung gezogen, wodurch der damit verrastete Spannbügel gegen eine Federkraft so verschwenkt wird, dass der Kugelkopf in die trägerseitige Kupplung gelange kann. Durch Führen des Betätigungshebels zum Fahrzeug oder durch Loslassen wird der Spannbügel durch die Federkraft über den Kugelkopf geschwenkt.

Die starre Kalotte ist so ausgebildet, dass sie auch mit dem Kupplungshals der fahrzeugseitigen Anhängerkupplung in Anlage kommt. Lässt ein Bediener nunmehr den Heckträger los, wirken auf die starre Kalotte im Bereich des Kupplungshalses Druckkräfte und auf den (bezüglich des Kugelkopfs) gegenüberliegenden Bügel Zugkräfte, derart, dass der Heckträger im Wesentlichen in der eingestellten Lage (vorzugsweise horizontal) stabilisiert wird. Nunmehr kann der Betätigungshebel nach hinten, unten (entgegen der Fahrzeuglängsrichtung) gezogen werden, wobei die über einen Rastmechanismus bestehende Verbindung zwischen dem Betätigungshebel und dem Spannbügel getrennt wird und dadurch ein Exzentergetriebe aktiviert wird.

Aus der vorstehenden Beschreibung des weiteren Stands der Technik wird deutlich, dass der Heckträger für ein Verspannen der Kupplung nicht mehr festgehalten werden muss, sodass der Bediener seine gesamte Aufmerksamkeit und Körperkraft auf den Verspannvorgang selbst, d.h. das Umlegen des Betätigungshebels lenken kann. Dennoch ist es bei diesem bekannten Heckträger erforderlich, dass mit oder unmittelbar nach dem Aufsetzen der heckträgerseitigen Kupplung auf den Kugelkopf der fahrzeugseitigen Anhängerkupplung der trägerseitige Spannbügel bezüglich der starren Kalotte hinter den Kugelkopf greift, um den Heckträger zu stabilisieren. Dies erfordert eine entsprechende Aufsetztechnik sowie eine präzise Schwenkmechanik des Spannbügels, um so wenig wie möglich Spiel zuzulassen.

Ferner wird auch bei diesem bekannten Heckträger ein separater Betätigungshebel verwendet, der in Fahrzeuglängsrichtung im Bereich der Kupplung schwenkbar gelagert ist, d.h. sich in geöffnetem Zustand im Wesentlichen vertikal über der Kupplung ausrichtet. In dieser Position muss ein Bediener über den Heckträger greifen, um an den Betätigungshebel zu gelangen. Bei einer Heckträgertiefe, ausgelegt für zwei oder ggf. drei Fahrräder ist dies noch möglich, bei tieferen Trägern, etwa für vier Räder wird diese Betätigungsweise jedoch problematisch und für manche Bediener nicht mehr ausführbar.

Die für E-Bikes vorgesehenen Heckträger sind zusätzlich mit einigen speziellen technischen Bauteilen bestückt, die insbesondere das Be- und Entladen des Heckträgers erleichtern sollen. So ist es u.A. vorgesehen, im Heckträger eine Art ausziehbare Laderampe oder Schiene zu integrieren, sodass ein vergleichsweise schweres E-Bike nicht auf den Heckträger gehoben werden muss, sondern einfach hoch gerollt werden kann. Was die Gewährleistung der Funktionsfähigkeit eines solchen E-Bikes anbetrifft, sind jedoch im Stand der Technik keine Vorkehrungen getroffen.

### Allgemeine Darstellung der Erfindung

Angesichts dieser Problematik ist es die Aufgabe der vorliegenden Erfindung, einen Heckträger dieser Gattung insbesondere für E-Bikes zu schaffen, der eine höhere Funktionalität aufweist. Ein bevorzugtes Ziel ist es, den Heckträger derart auszurüsten, dass er zur Aufrechterhaltung der Funktionsfähigkeit eines E-Bikes beiträgt. Ein anderes Ziel ist es, die Handhabbarkeit des Heckträgers zu verbessern. Ein weiteres bevorzugtes Ziel ist es, die zur Montage des Heckträgers an einer fahrzeugseitigen Anhängerkupplung gemäß vorstehend genanntem Aufbau aufzuwendende Muskelkraft zu verringern. Ferner ist es ein bevorzugtes Ziel der vorliegenden Erfindung, den Heckträger für eine Vielzahl von Anhängerkupplungen der Kugelkopfbauart passend zu gestalten, deren Kugelkopfdurchmesser ggf. unterschiedlich sind. Schließlich sollte in vorteilhafter Weise der erfindungsgemäße Heckträger möglichst sicher in seinem Gebrauch sein.

Die vorstehend genannte Aufgabe wird erfindungsgemäß durch einen Heckträger mit den Merkmalen des Schutzanspruchs 1 gelöst. Die weiteren Ziele werden durch die vorteilhaften Aspekte des Erfindungsgegenstands erreicht, die ggf. auch als unabhängige Detaillösungen individuell beansprucht werden können.

Ein Grundgedanke der Erfindung besteht darin, den Heckträger mit solchen technischen Grundbauteilen auszurüsten, die insbesondere für E-Bikes vorteilhaft sind. Ein besonders wichtiges Grundbauteil bildet dabei eine elektrische Ladestation für den Akkumulator beispielsweise des E-Bike.

Heckträger dieser Gattung sind in der Regel mit einer internen Beleuchtungseinrichtung versehen. Zu diesem Zweck haben sie einen vorzugsweise genormten elektrischen Stecker, der in die fahrzeugseitige Steckdose der Anhängerkupplung eingesteckt wird, um Brems-, Blink- und Rückleuchten mit elektrischem Strom zu versogen. Solche Steckdosen führen standartgemäß aber auch einen elektrischen Kontakt mit Dauerstrom. Dieser hat bei herkömmlichen PKWs generell 12V und bei LKWs in der Regel 24V Spannung.

Erfindungsgemäß ist es nunmehr vorgesehen, den Heckträger mit einer eigenen Ladestation auszubilden, an die beispielsweise die Akkus eines oder mehrer E-Bikes vorzugsweise gleichzeitig anschließbar sind. Vorteilhaft ist es, wenn die Ladestation im Heckträger, beispielsweise in einem Basiselement integriert ist, um so vor Beschädigung und/oder Feuchtigkeit geschützt zu sein. Ein solches Basiselement ist vorliegend ein zentrales Rohrprofil, an dem sich die Trägerseitige Kupplung befindet und an das Auflagerrahmen für das/die E-Bikes anmontiert sind.

Ferner sollte die Ladestation entweder einen manuellen Umschalter zumindest für die zwei vorstehend genannten Standartspannungen des Fahrzeug-Bordnetzes haben oder eine automatische Spannungserkennung besitzen, welche die aktuell anliegende (Eingangs-) Spannung erkennt. In Übereinstimmung hierzu ist es sinnvoll, die Ladestation mit einer weiteren Eingabeeinheit auszurüsten, über die die erforderliche Akku-Spannung (Ausgangsspannung) eingegeben werden kann. Alternativ oder zusätzlich hierzu kann die Ladestation aber auch mit einer Steuerungselektronik versehen sein, die eigenständig die Akkuspannung erfasst und eine entsprechende Ladespannung (Ausgangsspannung) erzeugt.

Alternativ oder zusätzlich sollte die Steuerungselektronik auch den zur Verfügung stehenden Ladestrom überwachen, der sich in Abhängigkeit der gerade aktivierten Heckträgerbeleuchtung ändert.

Die erfindungsgemäße Ladestation hat insbesondere im Fall von LED-Heckträgerleuchten den Vorteil, dass viel Ladestrom zur Verfügung steht, der ansonsten ungenutzt vernichtet werden müsste.

Vorteilhaft ist es, wenn die Ladestation oder deren Steuerungselektronik mehrere Ausgangskanäle aufweist, die weiter vorzugsweise unabhängig voneinander ansteuerbar sind. Auf diese Weise ist es möglich, mehrere E-Bikes gleichzeitig an die Heckträger integrierte Ladestation anzuschließen, wobei auch unterschiedliche Akkus mit zueinander unterschiedlicher Ladespannung/Kapazität/Ladestrom gleichzeitig von der gleichen Ladestation geladen werden können.

Zu diesem Zweck hat die erfindungsgemäße Ladestation vorzugsweise eine Anzahl von elektrischen Steckdosen oder Buchsen, an denen Ladekabel mit entsprechenden Steckern anschließbar sind. Alternativ ist es aber auch möglich, dass eine Anzahl von Ladekabeln an der Ladestation fest angeschlossen sind und vorzugsweise am Heckträger in einer entsprechenden Kabelaufnahme/-fach gelagert sind. Die Ladekabel sind an ihren freien Enden mit Batterieklemmen oder Adaptersteckern bestückbar, die an den E-Bikes bedarfsgerecht anschließbar sind.

Ein anderer Grundgedanke der Erfindung besteht gemäß einem Aspekt darin, die trägerseitige Kupplung mit einer Spannvorrichtung und einer Stabilisierungsvorrichtung zum Stabilisieren des Heckträgers in einer vordefinierten Position (im Wesentlichen horizontal) nach dem Aufsetzen des Trägers auf die fahrzeugseitige Kupplung jedoch vor dem Betätigen der Kupplung auszurüsten und insbesondere die Spannvorrichtung als funktionell sowie konstruktiv getrennte Baugruppe auszubilden. Dadurch ist es möglich, die Spannvorrichtung für den Aufsetzvorgang in eine Position zu bewegen, in der sie keinen Kontakt mit der fahrzeugseitigen Anhängerkupplung bekommt, also an dem Stabilisierungsvorgang nicht beteiligt ist. Somit kann die Stabilisierungsvorrichtung für den Aufsetzvorgang optimiert werden, um diesen zu erleichtern und die Spannvorrichtung kann für den Fixiervorgang des Trägers an der Anhängerkupplung optimiert werden, um diesen für den Benutzer zu erleichtern.

Dies ist insbesondere bei Heckträgern vorteilhaft, die für E-Bikes ausgelegt, d.h. robust und damit schwer ausgeführt sind.

Die Stabilisierungsvorrichtung zum selbständigen (losen) Halten des noch nicht reibschlüssig fixierten Trägers auf der fahrzeugseitigen Anhängerkupplung sieht konkreter ausgedrückt im Wesentlichen zwei Elemente vor, die unabhängig zur Spannvorrichtung der trägerseitigen Kupplung ausgebildet sind. Eines dieser Elemente wirkt zumindest anteilig in vordefinierter Fahrtrichtung auf den Kugelhals (unmittelbar unterhalb des Kugelkopfs) der Anhängerkupplung und das andere dieser Elemente wird zumindest anteilig entgegen der vordefinierten Fahrtrichtung des Trägers auf die Anhängerkupplung, vorzugsweise auf den Kugelkopf. Beide Elemente sind dabei zueinander höhenbeabstandet, sodass diese einem Drehmoment insbesondere durch das Gewicht des Trägers entgegenwirken können.

Im Einzelnen hat der erfindungsgemäße Lastenheckträger, der an eine Kugelkopf-Anhängerkupplung eines Fahrzeugs mittels einer trägerseitigen Kupplung anschließbar ist, zumindest zwei mit der Anhängerkupplung zusammenwirkende Kupplungselemente, von denen eines über eine erste Handhabe zwischen einer Einkupplungsposition und einer Spannposition bewegbar ist. Als Einkupplungsposition ist eine Position zu verstehen, in der das zu betätigende, bewegbare Kupplungselement keinen Kontakt mit der fahrzeugseitigen Anhängerkupplung hat oder erhält. Als Spannposition ist eine Position definiert, in der das zu betätigende, bewegbare Kupplungselement eine Lage relativ zum Kugelkopf der fahrzeugseitigen Anhängerkupplung bzw. des anderen Kupplungselements einnimmt, in der es mit einer Vorspannkraft beaufschlagt wird oder beaufschlagbar ist, um dadurch den Heckträger über eine Reibschlussverbindung an der fahrzeugseitigen Kupplung zu fixieren. D.h. die Spannposition ist eine unmittelbare Vorstufe zu dieser Reibschlussposition.

Ferner hat der erfindungsgemäße Lastenträger eine Stabilisierungsvorrichtung für dessen (lose/unverspannte) Stabilisierung in einer vorbestimmten, vorzugsweise im Wesentlichen horizontalen Position, wenn sich das eine zu betätigende, bewegbare Kupplungselement in seiner Einkupplungsposition gemäß vorstehender Definition befindet, also nicht mit der Anhängerkupplung in Kontakt geraten kann/soll. Erfindungsgemäß umfasst die Stabilisierungsvorrichtung unter anderem einen in eine vordefinierte Fahrtrichtung des Trägers ausgerichteten, vorzugsweise teilkreisförmigen oder teilkreisförmig wirkenden (V-förmigen) Anschlag (Leiste/**V**orsprung) am Lastenheckträger, der dafür angepasst ist, unterhalb des Kugelkopfs am Hals der fahrzeugseitigen Kupplung in Anlage zu kommen sowie ein weiteres Gegenkraftelement, vorzugsweise das andere (nicht zu betätigende) Kupplungselement, das beispielhaft die Form einer Kugelkalotte hat und bezüglich seiner Wirkfläche(n) im Wesentlichen quer zur vorbestimmten Fahrtrichtung ausgerichtet ist, d.h. im Wesentlichen senkrecht zum Anschlag steht.

Entscheidend bei der erfindungsgemäßen Stabilisierungsvorrichtung ist es demnach, dass zumindest zwei nicht zu betätigende (ggf. jedoch einmalig an die Geometrie der Anhängerkupplung einstellbare) Anschläge am Lastenträger vorgesehen sind, zwischen denen die fahrzeugseitige Anhängerkupplung eingesetzt wird, derart, dass eine Kraft in Fahrtrichtung auf den Kupplungshals und eine Kraft entgegen der Fahrtrichtung auf die Anhängerkupplung, vorzugsweise den Kupplungskopf der Anhängerkupplung aufbringbar ist - also im Höhenabstand zur Kraft in Fahrtrichtung angeordnet ist.

Die Wirkfläche des Gegenkraftelements ist folglich so ausgebildet, dass sie die Anhängerkupplung, vorzugsweise den Kugelkopf bezüglich des Anschlags zumindest teilweise hintergreift, derart, dass sie eine Druckkraft(-komponente) auf die Anhängerkupplung, vorzugsweise den Kugelkopf entgegen der vordefinierten Fahrtrichtung des Trägers übertragen kann. Darüber hinaus bildet das Gegenkraftelement ggf. einen (vertikal ausgerichtete) in Querrichtung weisende Positionierfläche, welche den Träger in der korrekten zentralen Lage bezüglich der Anhängerkupplung positioniert. Das sich hieraus ergebende Drehmoment wirkt einer Schwenkbewegung des Trägers um den Kugelkopf entgegen und stabilisiert diesen in einer vorbestimmten (horizontalen) Ausrichtung.

Gemäß einer bevorzugten Ausgestaltung des Lastenträgers ist das manuell bewegbare Kupplungselement ein schwenkbar am Träger gelagerter, vorzugsweise U-förmiger Spannbügel, dessen Schwenkachse sich im Wesentlichen in Fahrtrichtung erstreckt und der in Spannposition in Richtung zum anderen Kupplungselement unter dazwischen Einklemmen des Kugelkopfs der fahrzeugseitigen Anhängerkupplung anspannbar ist. D.h. die Schwenkrichtung des Spannbügels ist erfindungsgemäß nicht in Fahrtrichtung sondern quer dazu vorgesehen. Dies hat den Vorteil, dass der Spannbügel bei Belastung des Trägers mit einer Transportlast nicht zusätzlich auf Zug belastet wird und daher seine Belastungsgrenze nicht überschritten werden kann. D.h. die Verspannung des Spannbügels quer zur vordefinierten Fahrtrichtung erweist sich als günstiger im Kraftfluss.

Gemäß einem anderen Grundgedanken der Erfindung ist es vorgesehen, dass die Bewegung der Spannvorrichtung zwischen der Einkupplungs- und Verspannposition, in entscheidender Weise jedoch zumindest das Betätigen der Spannvorrichtung für ein Fixieren (Reibverschließen)/Lösen des Trägers an/von der Anhängerkupplung getrennt voneinander mittels jeweils einer unabhängigen Handhabe erfolgt. Hierdurch wird die Mechanik der Betätigungseinrichtung vereinfacht und deren Zuverlässigkeit gesteigert.

Hierfür hat es sich als besonders günstig erwiesen, den erfindungsgemäßen Lastenträger mit dem vorstehend bereits erwähnten zentralen Basiselement auszubilden, an dem die trägerseitige Kupplung, die Stabilisierungsvorrichtung sowie zwei schwenkbar am Basiselement gelagerte Auflagerrahmen für die Last angeordnet sind, die zwischen einer Parkposition und einer Auflagerposition verschwenkbar sind. Diese Konstruktion erlaubt es nunmehr, den einen der Auflagerrahmen vorzugsweise als die erste Handhabe zum Verschwenken des Spannbügels zwischen seiner Einkupplungs- und Spannposition, in jedem Fall jedoch den anderen der Auflagerrahmen als eine zweite Handhabe zum Anspannen des Spannbügels vorzusehen. Damit entfallen zusätzliche Hebel oder Handräder, welche vom Träger vorragen und damit eine potentielle Gefahrenquelle für Verletzungen bilden. Auch verringert sich die Zahl der Bauteile, wodurch sich das Gewicht des Trägers verkleinert und damit dessen Handhabbarkeit verbessert. Unabhängig davon trägt diese Maßnahme deutlich zur Verbesserung der Trägerästhetik bei. Schließlich haben die Auflagerrahmen eine erhebliche Auskragung, wodurch ein großer Hebelarm geschaffen wird. Dies trägt dazu bei, die notwendige Muskelkraft insbesondere für das obligatorische Verspannen der trägerseitigen Kupplung zu verringern.

Um die Klappbewegungen der Auflagerrahmen am Basiselement auf die Kupplung zu übertragen, ist der eine Auflagerrahmen vorzugsweise über einen Torsionsstab und einem nachgelagerten Pleuel mit dem Spannbügel für dessen Verschwenken wirkverbunden und der andere Auflagerrahmen vorzugsweise mit einem Rastmechanismus gekoppelt, an den eine Kardanstange/-welle für eine Drehmomentübertragung auf ein Kurbelgetriebe wie beispielsweise eine Exzenter- oder eine Nockenvorrichtung angeschlossen ist, über die eine Anspannkraft auf den Spannbügel aufbringbar ist. Dabei können der Torsionsstab und die Kardanwelle längs sowie beidseits des Basiselements und ggf. sogar innerhalb des Basiselements verlaufen.

Auch hat es sich gezeigt, dass Anhängerkupplungen unterschiedliche Kugelkopfdurchmesser aufweisen können, an die der Lastenheckträger angepasst werden muss. Es ist daher sinnvoll, dass diese Anpassung quasi automatisch vom Träger selbst ausgeführt wird. Daher hat der Rastmechanismus gemäß einem anderen Aspekt der Erfindung einen Rasthebel, an dem eine definierte Mitnahmekulisse (beispielsweise ein Zahnsegment) ausgeformt ist, die in Abhängigkeit vom notwendigen Stellweg für ein Anlegen des Spannbügels aus seiner Spannposition an den Kugelkopf der fahrzeugseitigen Anhängerkupplung (Fixierposition) bei einem entsprechenden Aufklappwinkel des anderen Auflagerrahmens mit einem an diesem Auflagerrahmen angeordneten Mitnahmeglied (zum Beispiel eine an einem Bolzen drehbar gelagerte Einrastklinke oder Nocke) in Eingriff kommt, um durch die Rest-Aufklappbewegung eine Mindestanspannung unabhängig vom Kugelkopfdurchmesser zu gewährleisten.

Schließlich ist es gemäß einem anderen Aspekt der Erfindung vorgesehen, einen unabhängig von der Kupplung am Basiselement angeordneten Abklappmechanismus zum wahlweisen Verschwenken der Auflagerrahmen in Fahrtrichtung des Trägers und ein am Heck des Trägers gelagertes Trittpedal vorzusehen, das über einen Getriebezug mit dem Abklappmechanismus für dessen Freigabe/Arretierung wirkverbunden ist.

### Kurzbeschreibung der Zeichnungen

Die Erfindung wird nachstehend anhand eines bevorzugten Ausführungsbeispiels unter Bezugnahme auf die begleitenden Zeichnungen näher erläutert.
Fig. 1 zeigt einen Fahrzeugheckträger gemäß einem bevorzugten Ausführungsbeispiel der Erfindung als Perspektivenansicht von schräg, vorne in seiner Einkuppel- bzw. Parkposition,
Fig. 2 zeigt den erfindungsgemäßen Fahrzeugheckträger als Perspektivenansicht von schräg, hinten in einer Spannposition,

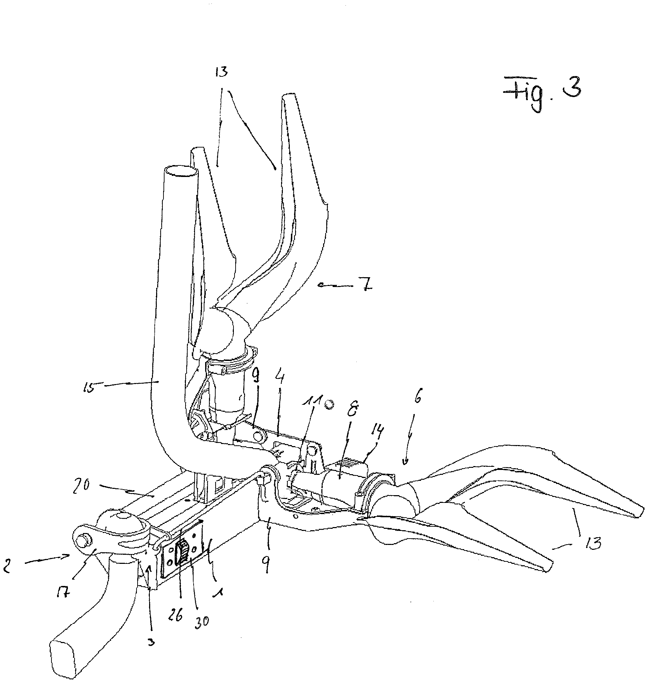

Fig. 3 zeigt den erfindungsgemäßen Fahrzeugheckträger als Perspektivenansicht von schräg, vorne in einer Spannposition,
Fig. 4 zeigt den erfindungsgemäßen Fahrzeugheckträger als Perspektivenansicht von schräg, vorne in einer Fixier- bzw. Transportposition und
Fig. 5 zeigt eine Stabilisierungsvorrichtung im vergrößerten Längsschnitt im Fall einer Einkupplungsposition der Spannvorrichtung.

### Detaillierte Figurenbeschreibung

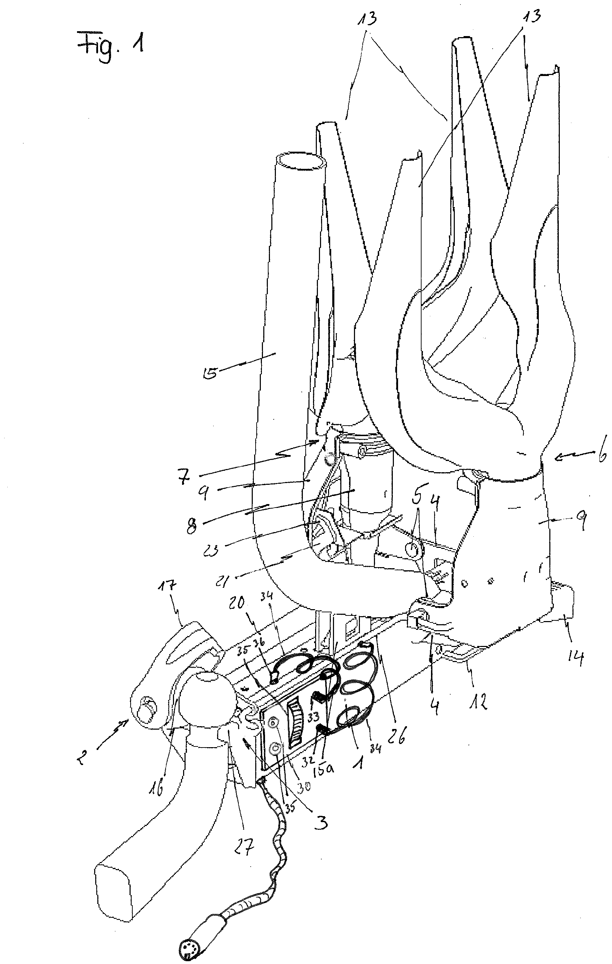

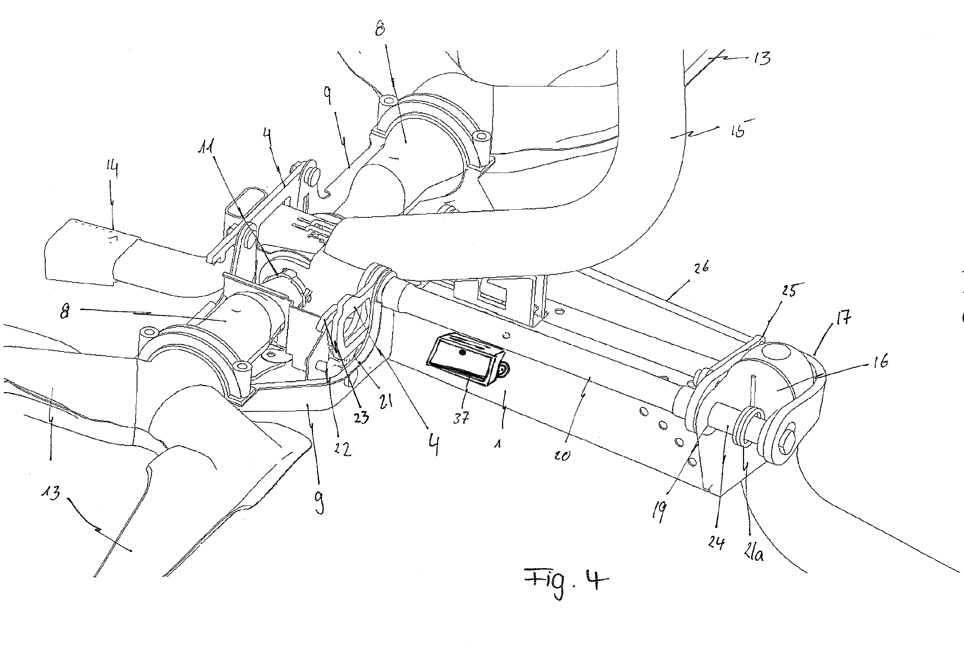

Der erfindungsgemäße kupplungsgebundene Fahrzeugheckträger, wie er in der Fig. 1 perspektivisch dargestellt ist, hat im Wesentlichen ein Basiselement oder Basisträger 1 vorzugsweise in Form einer Strebe oder eines Balkens mit einem im Querschnitt geschlossenen Kastenprofil, an dessen einem axialen (zur Anhängerkupplung zugewandten) Ende eine Kupplung 2 sowie eine Stabilisierungsvorrichtung 3 angeordnet ist, wie sie nachfolgend noch detaillierter beschrieben werden. Am axial anderen freien Endabschnitt des Basisträgers 1 ist eine Anlenkeinheit in Form von zwei axial voneinander beabstandeten, jeweils senkrecht zum Basisträger 1 sich erstreckenden Halteplatten 4 angeschweißt, zwischen denen beidseits des Basisträgers 1 jeweils Schwenkachsen oder Schwenkzapfen 5 eingesetzt sind, die parallel zueinander sowie seitlich längs des Basisträgers 1 verlaufen. An den Schwenkachsen 5 sind jeweils ein Auflagerrahmen 6, 7 beidseits des Basisträgers 1 angelenkt, derart, dass die Auflagerrahmen 6, 7 in eine Parkposition gemäß der Fig. 1 zusammenklappbar sind, in der die Rahmen 6, 7 im Wesentlichen parallel zueinander zu liegen kommen, sowie in eine Transportposition aufklappbar sind, in der die beiden Auflagerrahmen 6, 7 eine gemeinsame, im Wesentlichen plane Auflagerfläche definieren. Diese Position ist Gegenstand der Fig. 4.

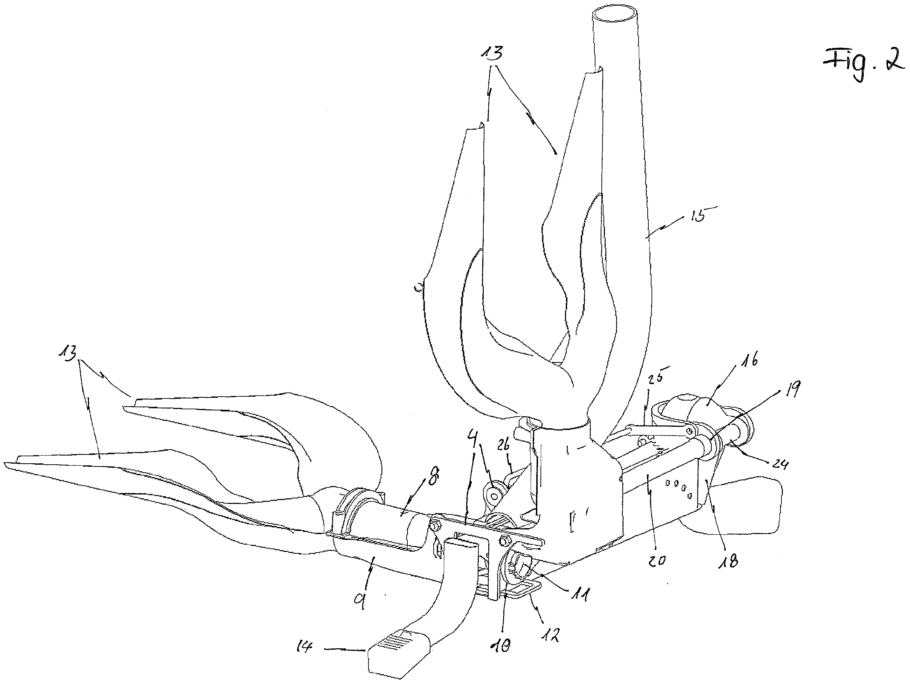

Wie aus der Fig. 1 weiter zu entnehmen ist, besteht jeder Auflagerrahmen 6, 7 aus einem zentralen Lagerstutzen 8, der um seine Längsachse drehbar in einer Schwenkschale 9 gelagert ist, die wiederum jeweils an eine Schwenkachse 5 auf einer Seite des Basisträgers 5 anscharniert sind, um wie ein Buch auf- und zugeklappt werden zu können. Im Bereich der Schwenkschalen 9 (unterhalb der Schwenkachsen 5) weist der Basisträger 1 gemäß der Fig. 2 eine durchgehende Querbohrung 10 (senkrecht zu den Schwenkachsen 5 ausgerichtet) auf, in die eine Verbindungshülse 11 drehbar eingesteckt und axial gesichert ist. Unterhalb der Querbohrung 10 sind am Basisträger 1 beidseits Einrastlaschen 12 angeschweißt, die mit nicht gezeigten, manuell lösbaren Rasthaken an den Schwenkschalen 9 in Rasteingriff kommen, wenn diese in die vorstehend genannten Transportposition gemäß der Fig. 4 aufgeklappt sind. Die Verbindungshülse 11 ist ferner so positioniert und dimensioniert, dass die zentralen (rohrförmigen) Lagerstutzen 8, die in den Schwenkschalen 9 drehbar gelagert sind, in aufgeklappter Position der Auflagerrahmen 6, 7 axial in die Verbindungshülse 11 beidseits (endseitig) formschlüssig eingesteckt sind, um ein Drehmoment übertragen zu können. Das freie Ende jedes Lagerstutzens 8 gabelt sich in zwei parallel sich erstreckende, den jeweiligen Lagerstutzen 8 verlängernde Lagerschalen 13, welche den statischen Unterbau einer nicht weiter dargestellten Verschalung vorzugsweise aus Kunststoff bilden, die wiederum die Auflagerfläche für eine zu transportierende Last, wie beispielsweise Fahrräder darstellt.

An der Verbindungshülse 11 ist überdies eine Stützstange 15 drehfest über daran (an der Stange 15) ausgeformte Laschen befestigt, die beidseits den Basisträger 1 (U-förmig) umgreifen und an der Verbindungshülse 11 axial gesichert sind. Die Stützstange 15 erstreckt sich dabei im Wesentlichen senkrecht zur Auflagerfläche und ist mit nicht weiter gezeigten Montage-/Halteschellen an ihrem freien Endabschnitt versehen. Diese Stützstange 15 ist beispielsweise für den aufrechten Transport von Fahrrädern erforderlich, die auf der Auflagerfläche parallel zueinander sowie quer zur vordefinierten Fahrtrichtung des Trägers abgestellt sind.

Innerhalb des (hohlen) Basisträgers 1 ist im Bereich zwischen den beiden axial beabstandeten Halteplatten 4 ein Rastmechanismus (in den Figuren lediglich der Rasthaken 15a sichtbar) untergebracht, der mit der Stützstange 15 in Rasteingriff steht oder bringbar ist und diese in der Transportposition gemäß der Fig. 4 hält. In dieser Position erstreckt sich die Auflagerfläche im Wesentlichen parallel zum Basisträger 1 (horizontal). An dem Rastmechanismus ist eine Handhabe beispielsweise in Form eines schwenkbar am Basisträger 1 gehaltenen Trittpedals 14 angelenkt, das sich nach hinten über das freie Ende des Basisträgers 1 hinaus erstreckt, und das bei manueller Betätigung (Treten des Pedals 14 mit dem Fuß) die Verrastung zur Stützstange 15 freigibt. In diesem Fall lässt sich die Verbindungshülse 11 innerhalb der Querbohrung 10 verdrehen, wodurch die Lagerstutzen 8 sowie die daran angeschlossenen Lagerschalen 13 in den Schwenkschalen 9 um deren Längsachse mit gedreht werden und sich die von den Lagerschalen 13 definierte Auflagerfläche nach hinten neigt bzw. verkippt.

Schließlich ist an der Stützstange 15 eine Art Fangvorrichtung beispielsweise in Form von Fangriemen fixiert (nicht weiter gezeigt), die ein Verdrehen der Verbindungshülse 11 nur bis zu einem bestimmten Verdrehwinkel zulässt. Alternativ oder zusätzlich ist es aber auch möglich, die Verbindungshülse 11 mit einer Hinterschneidung auszubilden, die mit einer entsprechenden Hinterschneidung in der Querbohrung 10 in Anschlag kommt, um die Drehbewegung zu begrenzen.

D.h. wird das vorstehend genannte Pedal 12 getreten, um die Auflagerfläche durch Drehen der Verbindungshülse 11 nach hinten abzukippen, folgen die Stützstange 15 mit den daran gekoppelten Lagerschalen 13 und damit die darauf abgestellten Fahrräder dieser Abkippbewegung, ohne dass diese von der nunmehr geneigten Auflagerfläche abgleiten.

Im Nachfolgenden werden nunmehr die Kupplung 2 sowie die Stabilisierungsvorrichtung 3 näher beschrieben.

Die Kupplung 2 hat vorliegend zwei Kupplungselemente, nämlich eine feste am Basiselement 1 fixierte oder daran voreinstellbar gehaltene, jedoch nicht zu betätigende Teilkugelschale oder Kalotte 16 und einen zu betätigenden Spannbügel 17, der schwenkbar am Basiselement 1 gelagert ist.

Im Konkreten ist am vorderen axialen Ende des Basiselements 1 eine Endplatte 18 quer zum Basiselement 1 angeschweißt, die partiell randseitig über das Kastenprofil des Basiselements 1 vorragt. An der Endplatte 18, insbesondere an deren einem Seitenrandbereich ist wiederum die Kugelkalotte 16 fixiert oder einstückig daran ausgebildet, derart, dass sich deren konkave Wirk- oder Anlagefläche im Wesentlichen senkrecht zur Endplatte 18 erstreckt und somit dem gegenüberliegenden Seitenrandbereich der Endplatte 18 zugewandt ist. In der Endplatte 18 ist hinter der Kugelkalotte 16 eine Durchgangsbohrung 19 ausgeformt, in der eine Exzenterwelle 24 drehbar gelagert ist, wobei an einem axialen Ende der Exzenterwelle 24 eine Kardanwelle 20 auf- oder eingesteckt ist. Diese Kardanwelle 20 erstreckt sich dabei seitlich sowie längs des Basiselements 1 bis zu einer der Halteplatten 4 (jene der Kupplung bzw. der Endplatte 18 am nächsten liegende Halteplatte 4), in der ebenfalls eine Durchgangsbohrung zur Lagerung der Kardanwelle 20 ausgeformt ist. Am hintersten Ende der Kardanwelle 20 unmittelbar hinter der Halteplatte 4 ist ein Rasthebel 21 drehfest auf der Kardanwelle 20 fixiert. Dieser Rasthebel 21 hat eine vordefiniert geformte Kontaktkulisse oder ein Zahnsegment (nur andeutungsweise in der Fig. 4 dargestellt), deren Funktion nachfolgend noch im Einzelnen beschrieben wird. Darüber hinaus ist der Rasthebel 21 durch eine Feder 21 a in eine Drehrichtung hin zur Transportposition des auf dieser Seite des Basiselements 1 angeordneten Auflagerrahmens 7 vorgespannt.

An diesem Auflagerrahmen 7 und insbesondere an dessen Schwenkschale 9 ist ein Mitnehmer 22 in Form eines Eingriffsbolzens mit daran drehbar gelagerter Rastklinke (Eingriffsnocke) angeordnet, der bei einem vorbestimmten Schwenkwinkel in Richtung hin zur Transportposition mit der Kontaktkulisse in Anlage (Rasteingriff) kommt. An dieser Stelle sei darauf hingewiesen, dass der Rasthebel 21 an seinem freien Ende zu einem Stützfinger 23 abgekrümmt ist, der sich bei Verschwenken des Auflagerrahmens 7 aus der Transportposition in Richtung hin zur Parkposition ab einem bestimmten Schwenkwinkel an der Schwenkschale 9 abstützt, wodurch der Rasthebel 21 entgegen seiner Federvorspannung für die Restschwenkbewegung mitgenommen wird.

Am gegenüberliegenden vorderen Ende der Kardanwelle 20 ist das Excenterbauteil 24 in Form der Excenterwelle oder eines Spannnockens (nicht im Detail dargestellt) angeordnet, dessen exzentrische Wirkmantelflächen sich bei Verdrehen der Kardanwelle 20 in Querrichtung des Trägers von der Rückseite der Kugelkalotte 16 achsparallel wegbewegt. In dieses Excenterbauteil 24 ist der Spannbügel 17 drehbar an dessen Wirkmantelflächen eingehängt, sodass sich dieser bei Drehung des Excenterbauteils 24 zur Kalotte 16 hin- oder von dieser wegbewegt. In anderen Worten ausgedrückt bildet das Excenterbauteil 24 eine Art Kurbelgetriebe zur Transformation einer Rotationsbewegung der Kardanwelle 20 in eine Translationsbewegung des daran eingehängten Spannbügels 17 senkrecht zur Drehachse des Exzenterbauteils 24.

Im Konkreten hat der Spannbügel 17 eine U-Form, an dessen Schenkeln jeweils ein Lagerauge ausgebildet ist, durch die das Excenterbauteil 24 drehbar eingesteckt und axial gesichert ist. Somit kann der Spannbügel 17 um das Excenterbauteil 24 drehen und dabei die Kugelkalotte 16 wahlweise übergreifen.

Des Weiteren ist an dem Spannbügel 17 eine Stange oder Pleuel 25 versetzt zu den Lageraugen angelenkt, mittels welchem der Spannbügel 17 um das Excenterbauteil wahlweise geschwenkt werden kann. Das freie Ende des Pleuel 25 ist auf einer Torsionsstange oder -stab 26 drehbar gelagert, der wiederum in der Endplatte 18 sowie an der der Endplatte 18 unmittelbar gegenüberliegenden Halteplatte 4 auf der bezüglich der Kardanwelle 20 anderen (abgewandten) Seite des Basiselements 1 dezentral (exzentrisch) drehbar gelagert ist. Durch Drehen der Torsionsstange 26 wird das Pleuel 25 axial verschoben, was wiederum in eine Drehbewegung des Spannbügels 17 um das Excenterbauteil 24 konvertiert wird.

Das hintere (dem Pleuel 25 abgewandte) Ende der Torsionsstange 26 ist mit dem auf diese Seite des Basiselements 1 schwenkbar gelagerten Auflagerrahmen 6 und insbesondere dessen Schwenkschale 9 verbunden, derart, dass bei Zusammenklappen des Auflagerrahmens 6 in dessen Parkposition der Spannbügel 17 in seine Einkupplungsposition verschwenkt wird, in der sich der Spannbügel 17 im Wesentlichen über und/oder hinter der Kalotte 16 anordnet und bei Aufklappen des Auflagerrahmens 6 in dessen Auflager- bzw. Transportposition der Spannbügel 17 in eine Verspannposition verschwenkt wird, in der sich der Spannbügel 17 (bezüglich des Kugelkopfs) im Wesentlichen gegenüber der Kalotte 16 ausrichtet.

Die Stabilisierungsvorrichtung 3 besteht vorliegend im Wesentlichen aus einem vorzugsweise kragenförmigen (teilkreisförmigen) Anschlagsvorsprung oder Anschlagsleiste 27, die an der Endplatte 18 ausgebildet oder fixiert ist und eine Anlagefläche hat, die im Wesentlichen in Fahrtrichtung des Trägers weist. Die Leiste 27 ist dezentral zur Kalotte 16 platziert. In anderen Worten ausgedrückt, hat die Kalotte 18 ein Zentrum, das sich bezüglich des Kastenprofils des Basiselements 1 auf einer vorbestimmte Höhe, vorzugsweise oberhalb des Basiselements 1 befindet. Die Leiste 27 ist hinsichtlich dieses Zentrums nach unten um einen vorbestimmten Höhenabstand verlagert. Der Effekt dieser besonderen Geometrie wird nachfolgend im Rahmen der Funktionsbeschreibung des erfindungsgemäßen Lastenheckträgers genauer erläutert.

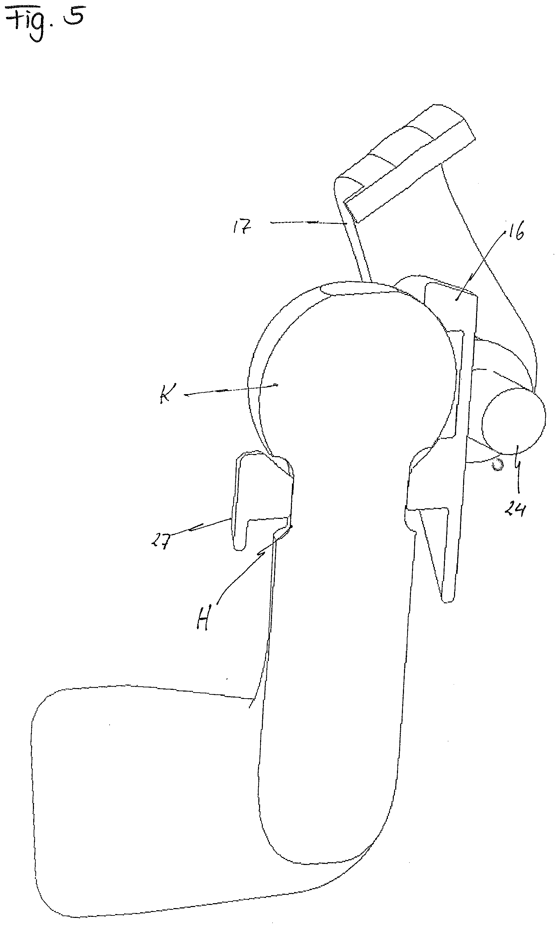

Im vorliegenden Ausführungsbeispiel erstreckt sich die Leiste 27 V-förmig oder teilkreisförmig, vorzugsweise halbkreisförmig, derart, dass ein äußerer Teilabschnitt der Leiste 27 (ein Schenkel der V-Form) diametral einem Wirkflächenabschnitt der Kalotte 16 gegenüber liegt. Hierzu wird insbesondere auf die Fig. 5 verwiesen, in der die Relativlage bzw. die Lagebeziehung zwischen der Kalotte 16 und dem Anschlag 27 dargestellt ist. Demzufolge ist die vorbestimmte Fahrtrichtung des Trägers schräg aus der Bildebene der Fig. 5 heraus. Der Anschlag 27 ist als V-förmig sich erstreckende Leiste ausgebildet mit Öffnung der V-Form in die definierte Fahrtrichtung. Quer zur definierten Fahrtrichtung ist die konkave Wirkfläche der Kalotte 16 ausgerichtet, deren Zentrum oberhalb der Leiste 27 platziert ist. Das Excenterbauteil 24 ist auf der der Wirkfläche abgewandten Seite der Kalotte 16 längs der Fahrtrichtung an der Kalotte 16 rotierbar gelagert. Der Spannbügel 17 ist wiederum schwenkbar am Excenterbauteil 24 gelagert und umgreift die Kalotte 16, derart, dass er aus einer Position oberhalb der Kalotte 16 gemäß der Fig. 5 in eine Position zentral gegenüber der Kalotte 16 schwenkbar ist.

Die Funktionen des erfindungsgemäßen Lastenheckträgers werden nachfolgend beschrieben:
Wird der erfindungsgemäße Lastenheckträger nicht gebraucht, befinden sich seine beiden bezüglich des Basiselements 1 gegenüberliegenden Auflagerrahmen 6, 7 in zusammengeklappter Parkposition gemäß der Fig. 1. In dieser Position ist der Verspannmechanismus der Kupplung 2 bestehend aus dem Excenterbauteil 24 und dem Spannbügel 17 gelöst und der Spannbügel 17 in seine Einkupplungsposition oberhalb der Kalotte 16 verschwenkt. In diesem Zustand kann der erfindungsgemäße Träger an eine fahrzeugseitige Anhängerkupplung herkömmlichen (in der Regel genormten) Aufbaus, d.h. bestehend aus Kugelkopf K und Hals H (siehe Fig. 5) angekuppelt werden.

Hierfür wird der Träger einfach auf die fahrzeugseitige Anhängerkupplung im Wesentlichen horizontal aufgesetzt. Bei diesem Vorgang kommt der Kugelkopf K in der Kalotte 16 in Anlage. Wird der Träger nunmehr vom Benutzer losgelassen, erfährt das Basiselement 1 eine geringfügige Abklappbewegung (Verschwenkung) nach hinten, solange, bis der leistenförmige Anschlag 27 den Kugelkopf K untergreift und sich gegen den Kupplungshals H unmittelbar unterhalb des Kugelkopfs K abstützt. In dieser Lage drückt die Leiste 27 gegen den Hals H, um die Abklappbewegung zu blockieren. Die für das Kräftegleichgewicht erforderliche Gegenkraft wird durch die Kalotte 16 aufgebracht, deren konkave Wirkfläche zumindest abschnittsweise in einem Winkel ungleich 90° zur definierten Fahrtrichtung des Trägers ausgerichtet ist und damit einen Kraftvektor entgegen der Fahrtrichtung auf den Kugelkopf K anlegt. Diese im Wesentlichen horizontale Lage des Basiselements 1 kann somit zwar ohne Zutun des Benutzers gehalten werden - sie ist jedoch nur bedingt stabil. In anderen Worten ausgedrückt, kann in diesem Zustand der Lastenheckträger einfach von der Anhängerkupplung wieder abgenommen werden. Außerdem kann der Träger horizontal auf der Anhängerkupplung zur Seite geschwenkt werden.

Wie insbesondere aus der Fig. 5 zu entnehmen ist, sind in diesem Stabilisierungsvorgang ausschließlich die feststehende, nicht zu betätigende Kalotte 16 und der nicht zu betätigende leistenförmige Anschlag 27 beteiligt. Der Spannbügel 17 ist in seine Einkupplungsposition zurückverschwenkt, in der er keinen Kontakt mit der fahrzeugseitigen Kupplung erhält. D.h. die Stabilisierung wird ausschließlich durch nicht zu betätigende Bauteile bewerkstelligt, die demzufolge fest auf eine bestimmte Relativlage (vorzugsweise horizontal) eingestellt sind, die für eine Stabilisierung des Trägers vor dessen Verspannung optimal und verschleißfrei ist.

An dieser Stelle sei darauf hingewiesen, dass an Stelle der Kalotte 16 auch ein anderes Bauteil beispielsweise mit zwei getrennten Wirkflächen vorgesehen werden kann, wobei eine Wirkfläche quer zur Fahrtrichtung und die andere Wirkfläche entgegen der Fahrtrichtung ausgerichtet ist.

Um den erfindungsgemäßen Lastenheckträger zu fixieren, muss zuerst der Spannbügel aus seiner Einkupplungsposition in seine Verspannposition verschwenkt werden.

Hierfür wird der eine Auflagerrahmen 6 am Basiselement 1 in seine Transportposition verschwenkt, in der sich seine Auflagerfläche im Wesentlichen horizontal ausrichtet. Diese Schwenkbewegung wird über den exzentrisch gelagerten Torsionsstab 26 in eine Translationsbewegung des daran gelagerten Pleuels 25 übertragen, die wiederum in eine Schwenkbewegung des Spannbügels 17 umgesetzt wird. Mit Erreichen der Transportposition hat auch der Spannbügel 17 seine Verspannposition eingenommen, in der er der Kalotte 16 diametral gegenüber liegt.

In diesem Zustand hat der Spannbügel 17 aber immer noch keinen (Anlage-) Kontakt mit dem Kugelkopf K der Anhängerkupplung. Im Gegenteil ist der Spannbügel 17 radial vom Kugelkopf K beabstandet, wobei der Abstand vom aktuellen Kugelkopfdurchmesser abhängig ist.

Nunmehr wird der andere Auflagerrahmen 7 aus seiner Parkposition gemäß der Fig. 1 in seine Transportposition gemäß der Fig. 4 verschwenkt. Dieser Schwenkbewegung folgt der Rasthebel 21 infolge seiner Federvorspannung und rotiert hierbei die Kardanwelle 20 solange, bis sich der Spannbügel 17 durch das Excenterbauteil 24 an den Kugelkopf K angelegt hat. In diesem Augenblick stoppt die Mitschwenkbewegung des Rasthebels 21 in einem bestimmten Schwenkwinkel in Abhängigkeit vom Abstand zwischen Spannbügel 17 und Kugelkopf K und damit in Abhängigkeit vom Kugelkopfdurchmesser.

Bei weiterer Verschwenkung des Auflagerrahmens 7 in Richtung seiner Transportposition kommt bei Erreichen eines weiteren vorbestimmten Schwenkwinkels der Mitnehmer 22, d.h. die auf dem Mitnahmebolzen gelagerte Rastklinke mit der Kulisse an dem Rasthebel 21 in Kontakt. Die Kulisse ist dabei so geformt, dass der Kontaktschluss mit der am Bolzen gelagerten Rastklinke 22 immer in im Wesentlichen dem selben Schwenkwinkel des Auflagerahmens 7 erfolgt unabhängig davon, in welchem Schwenkwinkel sich der Rasthebel 21 bei in Anlage kommen des Spannbügels 17 mit dem Kugelkopf K befindet. Auf diese Weise wird eine automatische Anpassung der Spannvorrichtung der Kupplung 2 an unterschiedliche Kugelkopfdurchmesser erreicht.

Für den verbleibenden Schwenkweg des Auflagerrahmens 7 bis zu seiner Transportposition wird der Rasthebel 21 von der am Bolzen gelagerten Rastklinke 22 wieder mitgenommen, wobei durch die hierbei erzeugte Rotation der Kardanwelle 20 der Spannbügel 17 zugbelastet wird und den Kugelkopf K zwischen sich und der Kalotte 16 verspannt. Die hierbei erforderliche Federspannwirkung wird durch eine Torsion der Kardanwelle 20 und/oder eine Biegung des Rasthebels 21 erzeugt. Bei Erreichen der Transportposition verrastet der Auflagerrahmen 7 mit der zugehörigen Einrastlasche 12, wodurch der Montagevorgang des Trägers an der fahrzeugseitigen Anhängerkupplung abgeschlossen ist.

In diesem Zustand können nun Lasten beispielsweise in Form von Fahrrädern aufgeladen werden, die an der Stützstange 15 fixiert werden. Um an den Kofferraum oder die Heckklappe des Fahrzeugs zu gelangen, kann das Pedal 14 betätigt werden, wodurch ein Verschwenken der Auflagerfläche und damit der darauf gelagerten Fahrräder nach hinten freigegeben wird. Die Demontage des Trägers erfolgt in der entgegengesetzten Reihenfolge der vorstehend beschriebenen Montageschritte.

Im Anschluss wird nunmehr auf eine erfindungsgemäße Ladestation 30 des Heckträgers eingegangen.

Wie aus der Fig. 1 zu ersehen ist, befindet sich die Ladestation 30 innerhalb des kastenförmigen bzw. hohlprofiligen Basiselements 1, sodass es vor mechanischen Belastungen und Feuchtigkeit geschützt ist. Alternativ hierzu könnte aber auch am Basiselement 1 ein Aufnahmebehälter oder Kasten, vorzugsweise mit Wartungsklappe befestigt sein, in dem die Ladestation 30 untergebracht ist.

Die Ladestation 30 hat einen elektrischen Eingangskanal (nicht dargestellt), an den vorzugsweise die Permanentspannung des elektrischen Bordnetzes des PKW/LKW über einen nicht detailliert gezeigten, Heckträger eigenen elektrischen Stecker 31 anlegbar ist und vorliegend zwei Ausgangskanäle 32, 33, an die jeweils ein Ladekabel 34 anschließbar oder fest angeschlossen sind. Es können aber auch nur ein Ausgangskanal oder mehr als zwei Ausgangskanäle vorgesehen sein.

Des Weiteren besteht die Ladestation 30 vorliegend aus einer Steuerungselektronik (innerhalb des Basiselements 1 und daher außen nicht sichtbar) zur Erfassung der Eingangsspannung aus dem elektrischen Bordnetz, die am Eingangskanal anliegt und der einzelnen Ausgangsspannungen, die an den Ausgangskanälen 32, 33 anliegen und die durch daran angeschlossene Akkus vorzugsweise von transportierten E-Bikes erzeugt werden. Basierend auf den Erfassungssignalen transformiert die Ladestation 30 die Eingangsspannung individuell auf die jeweiligen Lade- bzw. Ausgangsspannungen in Abhängigkeit der daran angeschlossenen Akkus. Durch Erfassung des aktuellen Ladezustands der einzelnen Akkus lässt sich auch der momentan erforderliche Ladestrom dynamisch anpassen, wobei auch eine bestimmte Laderoutine zur Auffrischung der Akkus durchführbar ist. Alternativ bzw. zusätzlich hierzu ist es aber grundsätzlich auch möglich, die Ladestation 30 mit einer Eingabeeinheit 35 zu versehen, über welche die Eingangsspannung und/oder die Ausgangsspannungen vorzugsweise individuell einstellbar sind.

Wie vorstehend bereits erwähnt wurde, sind an den Ausgangskanäle 32, 33 der Ladestation 30 jeweils ein Ladekabel 34 montiert oder montierbar. Die Ladekabel 34 haben an ihren freien Enden austauschbare Steckeradapter 36, die an die zu ladenden Akkus ansteckbar sind oder sie können mit einfachen Polklemmen (nicht gezeigt) bestückt sein/werden. Für die Ladekabel 34 ist am erfindungsgemäßen Heckträger gemäß Fig. 4 ein zusätzlicher Aufnahmebehälter 37 vorgesehen, in welchem die Kabel 34 und ggf. auch die Steckadapter 36 deponiert werden können.

Abschließend sei darauf hingewiesen, dass die erfindungsgemäß getrennte Ausbildung von Kupplung (Spannvorrichtung) und Stabilisierungsvorrichtung, die Betätigung der Stabilisierungsvorrichtung und Kupplung mittels der schwenkbaren Rahmen, der Abklappmechanismus wie auch die Ladestation Erfindungsaspekte darstellen, welche besonders für den Transport von E-Bikes individuell vorteilhaft sind und die getrennt voneinander bei einem Lastenheckträger einsetzbar. Daher sollen diese technischen Bestandteile des erfindungsgemäßen Trägers auch unabhängig voneinander sowie einzeln beispielsweise im Rahmen von möglichen Teilungsanmeldungen beansprucht werden können.

## Patentansprüche

1. Lastenheckträger, der an eine Kugelkopf-Anhängerkupplung eines Fahrzeugs mittels einer trägerseitigen Kupplung (2) anschließbar ist, **gekennzeichnet durch** eine trägereigene elektrische Ladestation (30) für zumindest einen Akkumulator vorzugsweise einer auf dem Träger transportierten Last.

2. Lastenheckträger nach Anspruch 1, **dadurch gekennzeichnet, dass** die Ladestation (30) in einem Profilbauteil des Heckträgers, beispielsweise in einem hohlprofiligen Basiselement (1) des Heckträgers integriert ist, das vorzugsweise ein zentrales Rohrprofil ist, an dem sich die trägerseitige Kupplung (2) befindet und an das Auflagerrahmen (6, 7) für die Last anmontiert sind.

3. Lastenheckträger nach einem der vorstehenden Ansprüche, **dadurch gekennzeichnet, dass** die Ladestation (30) entweder eine Eingabeeinheit (35) hat zur manuellen Eingabe einer Eingangsspannungen vorzugsweise des Fahrzeug-Bordnetzes und/oder zumindest einer Ausgangsspannung entsprechend des daran angeschlossenen zumindest einen Akkumulators oder eine automatische Spannungserkennung besitzt, welche die aktuell anliegende Eingangspannung und/oder die zumindest eine Ausgangsspannung erkennt.

4. Lastenheckträger nach einem der vorstehenden Ansprüche, **gekennzeichnet durch** eine Steuerungselektronik, die mehrere Ausgangskanäle zum Anschluss von Akkus aufweist, die vorzugsweise unabhängig voneinander ansteuerbar sind.

5. Lastenheckträger nach Anspruch 4, **dadurch gekennzeichnet, dass** die Ladestation (30) eine Anzahl von elektrischen Steckdosen oder Buchsen (32, 33) hat, an denen Ladekabel (34) mit entsprechenden Steckern anschließbar sind oder dass an der Ladestation (30) eine Anzahl von Ladekabeln (34) fest angeschlossen sind, wobei die Ladekabel (34) vorzugsweise am Heckträger in einer entsprechenden Kabelaufnahme (37) deponierbar sind.

6. Lastenheckträger nach einem der vorstehenden Ansprüche, **dadurch gekennzeichnet, dass** die Kupplung (2) zumindest aus zwei Kupplungselementen (16, 17) besteht, von denen eines (17) manuell zwischen einer Einkupplungsposition und einer Spannposition bewegbar ist, wobei eine Stabilisierungsvorrichtung (3) vorgesehen ist für dessen Stabilisierung in einer vorbestimmten, vorzugsweise im Wesentlichen horizontalen Lage, wenn sich das manuell bewegbare Kupplungselement (17) in seiner Einkupplungsposition befindet.

7. Lastenheckträger nach Anspruch 6, **dadurch gekennzeichnet, dass** die Stabilisierungsvorrichtung (3) besteht aus einem Kupplungselementen - unabhängigen, nicht zu betätigenden Anschlag (27), der dafür angepasst ist, unterhalb des Kugelkopfs am Hals der fahrzeugseitigen Kupplung in die vorbestimmten Fahrtrichtung des Trägers zumindest anteilig eine Stützkraft einzuleiten und einem nicht zu betätigenden Gegenkraftelement (16), das dafür angepasst ist, zumindest anteilig eine Druckkraft entgegen der Fahrtrichtung des Trägers auf die fahrzeugseitigen Kupplung im Höhenabstand zum Anschlag (27) vorzugsweise auf den Kugelkopf zu übertragen.

8. Lastenheckträger nach Anspruch 7, **dadurch gekennzeichnet, dass** das Gegenkraftelement (16) das andere Kupplungselement ist, das im Wesentlichen die Form einer Schale und vorzugsweise einer Kugelkalotte hat und dessen Wirkfläche im Wesentlichen quer zur vorbestimmten Fahrtrichtung so ausgerichtet ist, dass diese zumindest anteilig in Richtung hin zum unabhängigen Anschlag gewandt ist.

9. Lastenheckträger nach Anspruch 8 oder 9, **dadurch gekennzeichnet, dass** der unabhängige Anschlag (27) einen V-förmigen oder teilkreisförmig wirkenden Kragen bildet, dessen Anschlagsfläche zumindest abschnittsweise einem Teil der Wirkfläche des anderen, nicht zu betätigenden Kupplungselements (16) gegenüber liegt.

10. Lastenheckträger nach einem der Ansprüche 6 bis 9, **dadurch gekennzeichnet, dass** das manuell bewegbare Kupplungselement (17) ein schwenkbar am Träger gelagerter, vorzugsweise U-förmiger Spannbügel ist, dessen Schwenkachse sich im Wesentliche in Fahrtrichtung erstreckt und der in Spannposition in Richtung zum anderen Kupplungselement (16) unter dazwischen Einklemmen des Kugelkopfs der fahrzeugseitigen Anhängerkupplung anspannbar ist.

11. Lastenheckträger nach Anspruch 10, **dadurch gekennzeichnet, dass** das Anspannen und Lösen des Spannbügels (17) mittels einer zweiten, unabhängigen Handhabe (7) und vorzugsweise das Schwenkbewegen des Spannbügels (17) zwischen der Einkupplungsposition und der Spannposition mittels einer ersten unabhängigen Handhabe (6) und erfolgt, die jeweils im Heckbereich des Lastenheckträgers angeordnet sind.

12. Lastenheckträger nach einem der vorstehenden Ansprüche, **gekennzeichnet durch** ein zentrales Basiselement (1), an dem die trägerseitige Kupplung (2) angeordnet ist sowie zwei Auflagerrahmen (6, 7) für die Last schwenkbar gelagert sind, die zwischen einer Parkposition und einer Auflagerposition verschwenkbar sind und deren Schwenkachsen (5) parallel zueinander sowie in Fahrtrichtung des Trägers beidseits des Basiselements (1) ausgerichtet sind.

13. Lastenheckträger nach Anspruch 6, **dadurch gekennzeichnet, dass** einer der Auflagerrahmen (7) als Handhabe zum Anspannen und Lösen der Kupplung (2), insbesondere des Spannbügels (17) und vorzugsweise der andere der Auflagerrahmen (7) als Handhabe zum Bewegen der Kupplung (2), insbesondere des Spannbügels (17) zwischen einer Einkupplungs- und Spannposition vorgesehen ist.

14. Lastenheckträger nach Anspruch 13, **dadurch gekennzeichnet, dass** der eine Auflagerrahmen (6) über einen Torsionsstab (26) und einem nachgelagerten Pleuel (25) mit dem Spannbügel (17) für dessen Verschwenken wirkverbunden ist und der andere Auflagerrahmen (7) mit einem Rastmechanismus (21, 22, 23) gekoppelt ist, an den eine Kardanwelle (20) für eine Drehmomentübertragung auf eine Getriebe-, vorzugsweise Kurbelvorrichtung (24) angeschlossen ist, über die eine Anspannkraft auf den Spannbügel (17) aufbringbar ist.

15. Lastenheckträger nach Anspruch 14, **dadurch gekennzeichnet, dass** der Rastmechanismus einen Rasthebel (21) hat, der in Abhängigkeit vom notwendigen Stellweg für ein Anlegen des Spannbügels (17) aus seiner Spannposition an den Kugelkopf der fahrzeugseitigen Anhängerkupplung bei einem entsprechenden Aufklappwinkel des anderen Auflagerrahmens (7) mit einem daran fixierten Mitnahmeglied (22) in Eingriff kommt, um durch die Rest-Aufklappbewegung eine Mindestanspannung unabhängig vom Kugelkopfdurchmesser zu gewährleisten.

16. Lastenheckträger nach einem der vorstehenden Ansprüche 12 bis 15, **gekennzeichnet durch** einen unabhängig von der Kupplung (2) am Basiselement (1) angeordneten Abklappmechanismus (11) zum wahlweisen Verschwenken der Auflagerrahmen (6, 7) in Fahrtrichtung des Trägers und ein am Heck des Trägers gelagertes Trittpedal (14), das über einen Getriebezug mit dem Abklappmechanismus für dessen Freigabe wirkverbunden ist.
